(19) Europäisches Patentamt
European Patent Office
Office européen des brevets

(11) Veröffentlichungsnummer: **0 251 074**
**A2**

(12) **EUROPÄISCHE PATENTANMELDUNG**

(21) Anmeldenummer: **87108822.5**

(22) Anmeldetag: **19.06.87**

(51) Int. Cl.⁴: **G06F 3/023** , G06F 15/02

(30) Priorität: **21.06.86 DE 3620911**

(43) Veröffentlichungstag der Anmeldung:
**07.01.88 Patentblatt 88/01**

(84) Benannte Vertragsstaaten:
**AT BE CH ES FR GB GR IT LI LU NL SE**

(71) Anmelder: **Neubert, Ernst**
**Am See 9**
**D-2331 Holtsee(DE)**

(72) Erfinder: **Neubert, Ernst**
**Am See 9**
**D-2331 Holtsee(DE)**

(74) Vertreter: **Tönnies, Jan G.**
**Niemannsweg 133**
**D-2300 Kiel 1(DE)**

(54) **Datenerfassungs- und Auswertegerät für Arbeitsstudien.**

(57) Datenerfassusngs-und Auswertegerät für Arbeitsstudien, mit einer Mehrzahl von aus jeweils mehreren Tasten bestehenden Tastenfeldern, einer Displayfläche und einer unterhalb des Displayfläche angeordneten, zur Aufnahme eines Formblatts dienenden Schreibfläche, wobei ein erstes, wenigstens eine Spalte von den Zeilen des Formblatts auf der Schreibfläche zugeordneten Tasten aufweisende Tastenfeld links neben der Schreibfläche angeordnet ist, wobei die Tasten des ersten Tastenfeldes Stopp-Tasten bilden, ein zweites Tastenfeld oberhalb der Schreibfläche und rechts neben der Displayfläche angeordnet ist, wobei die Taste des zweiten Tastenfeldes zur Eingabe von Standard-Leistungsgraden dienen, ein drittes, aus in drei Spalten und vier Zeilen angeordneten Tasten bestehendes, oberhalb der Schreibfläche und neben der Displayfläche angeordnetes Tastenfeld, wobei die Tasten des dritten Tastenfeldes zur Eingabe numerischer Werte dienen, ein viertes Tastenfeld vorgesehen ist, dessen Tasten zur Eingabe von Standard-Zeitarten dienen, ein fünftes Tastenfeld benachbart zu der Displayfläche angeordnet ist, wobei die Tasten des fünften Tastenfeldes zur Steuerung eines Cursors auf der Displayfläche dienen, und ein sechstes Tastenfeld benachbart zu dem dritten Tastenfeld ange ordnet ist, wobei wenigstens einige der Tasten des sechsten Tastenfeldes zur Eingabe von Bezugsmengen in Verbindung mit den numerischen Tasten des Tastenfeldes dienen.

Fig. 2

### Datenerfassungs-und Auswertegerät für Arbeitsstudien

Die Erfindung betrifft ein Datenerfassungs-und Auswertegerät für Arbeitsstudien mit einer Mehrzahl von aus jeweils mehreren Tasten bestehenden Tastenfeldern, einer Displayfläche und einer unterhalb der Displayfläche angeordneten, zur Aufnahme von Formblättern dienenden Schreibfläche.

Seit längerer Zeit werden für Zeitaufnahmen zunehmend an Stelle von Stoppuhren oder Stoppuhrensysteme elektronische Datenerfassungs-und Auswertegeräte eingesetzt.

Der Anmeldung liegt die Aufgabe zugrunde, ein derartiges Gerät so auszubilden, daß der Bediener seine Aufmerksamkeit soviel wie möglich auf den beobachteten Ablauf richten und das Gerät weitgehend "blind" bedienen kann.

Erfindungsgemäß wird diese Aufgabe durch die im kennzeichnenden Teil des Anspruchs 1 und des diesem nebengeordneten Anspruchs 2 gelöst, wobei das Gerät nach Anspruch 1 für Rechtshänder und das Gerät nach Anspruch 2 für Linkshänder ausgebildet ist.

Die Erfindung wird im folgenden anhand einer Zeichnung erläutert. Dabei zeigt:

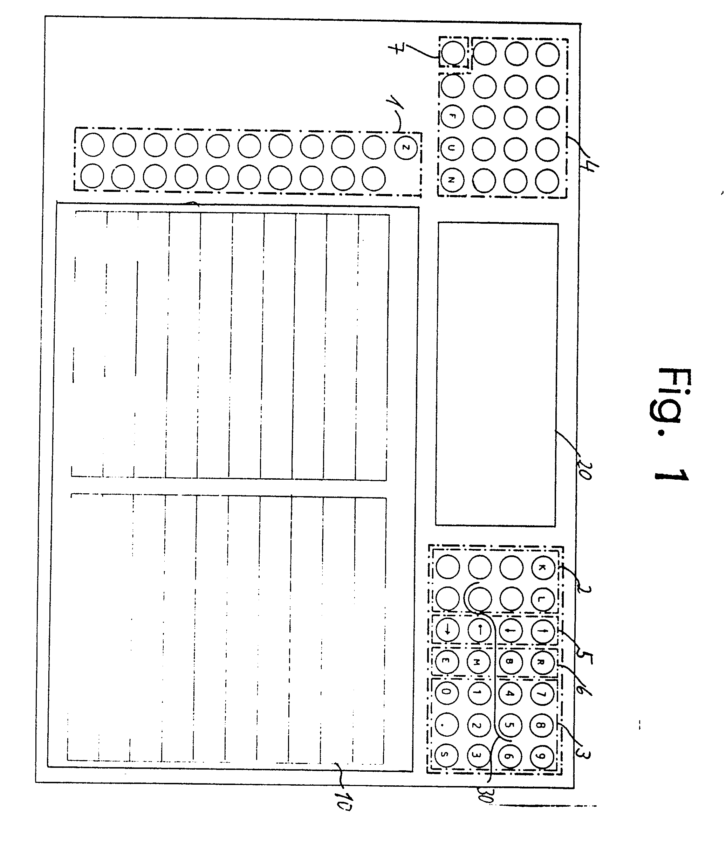

Fig. 1 eine schematische Darstellung der Bedienfläche des Gerätes mit die Alpha-Tastatur abdeckender, die Schreibfläche bildender Platte, und

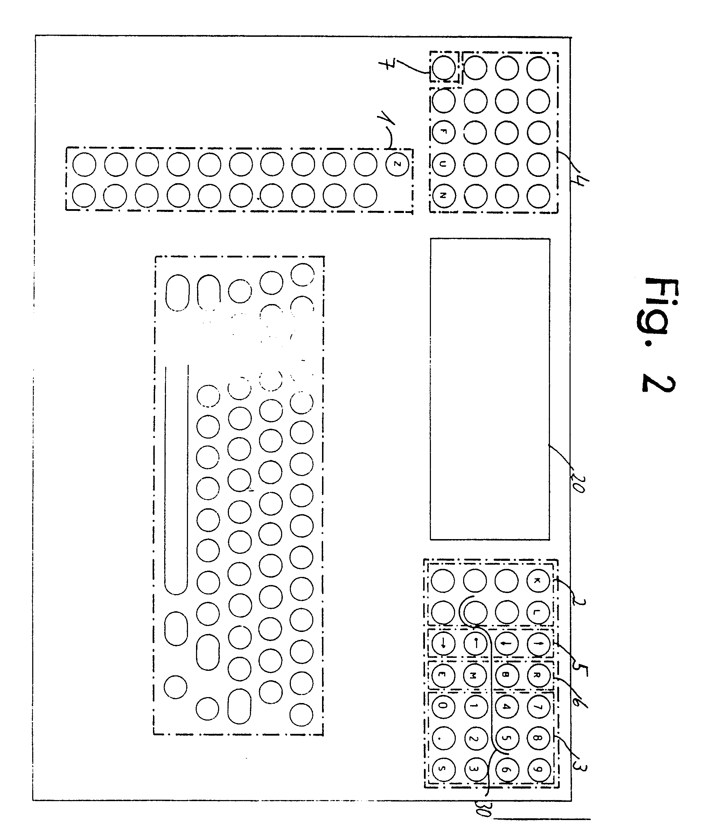

Fig. 2 eine entsprechende Darstellung bei entfernter Platte, wobei jeweils die Ausbildung für Rechtshänder dargestellt ist.

Das Tastenfeld 1 besteht aus zwei Spalten von Stop-Tasten, die horizontal mit den Zeilen des auf die Schreibfläche 10 aufgelegten Formblatts ausgerichtet sind. Dabei sind die Tasten der linken Spalte des Tastenfeldes 1 dem linken Block und die Tasten der rechten Spalte des Tastenfeldes 1 dem rechten Block der jeweils einem Abschnitt des beobachteten Arbeitsablaufs entsprechenden Zeilen des Formblatts zugeordnet. Eine visuelle oder taktile Suche nach einer räumlich von dem zugehörigen beschreibenden Text entfernten Taste entfällt damit. Im Tastenfeld 1 ist weiter eine besondere Taste Z vorgesehen, die bei zyklischen Ablauffolgen betätigt wird, so daß eine - eine Blickunterstützung erfordernde - Positionierung des Fingers entfallen kann, solange die Ablauffolge nicht unterbrochen wird.

Das nach dem ersten Tastenfeld 1 nächst häufig bediente Tastenfeld ist das zweite Tastenfeld 2. In diesem sind sechs Tasten vorgesehen, die jeweils einem Standard-Leistungsgrad entsprechen. Weitere Leistungsgrade werden mittels der Taste "L" in Verbindung mit einer der Tasten des dritten Tastenfeldes 3 eingegeben. "Ausreißer" werden durch Betätigung der Taste "K" geklammert, also von der Auswertung ausgenommen.

Die Bedienung des zweiten Tastenfeldes 2 erfolgt blind. Der Mittelfinger ruht dabei vorzugsweise auf der einem Leistungsgrad 110 zugeordneten Taste, die in der zweiten Spalte, zweite Zeile von unten angeordnet ist.

Das dritte Tastenfeld 3 besteht aus zwölf Tasten, nämlich 10 numerischen Tasten, einer Punkt-Taste und einer Seiten-Taste "S". Diese Seiten-Taste "S" wird bei Wechsel der Formblatt-Seite vor Eingabe der Seitennummer mittels der numerischen Tasten betätigt.

Das dritte Tastenfeld 3 dient weiter dazu, die Nummer der jeweils verwendeten Uhren vorzuwählen. In Verbindung mit der Taste "B" und der Taste "R" im sechsten Tastenfeld 6 dient das dritte Tastenfeld 3 weiter zur Eingabe von Bezugsmengen und Regressions-Bezugsmengen, die bei der Auswertung der erfaßten Daten durch das Gerät berücksichtigt werden sollen.

Die numerischen Tasten des dritten Tastenfeldes 3 dienen weiter zur Auswahl eines in der LCD-Displayfläche 20 angebotenen Menüpunktes.

Bei Bedienbereitschaft ruht der Mittelfinger auf der der Ziffer "5" zugeordneten Taste des dritten Tastenfeldes 3. Dabei ist eine Fingerführung 30 in Form einer Erhöhung oder einer Vertiefung vorgesehen, die den Mittelfinger bei einer Verlagerung der Bedienhand von dem dritten Tastenfeld 3 zu einer bestimmten der Tasten des Bedienfeldes 2 führt, so daß eine Verlagerung von der Ausgangstaste des einen Bedienungsfeldes zu der Ausgangstaste des anderen Bedienungsfeldes ohne visuelle Kontrolle möglich ist.

Das vierte Tastenfeld 4 umfaßt Tasten für die Standard-Zeitarten, Tasten für Zeitartkodierungen in Verbindung mit den Tasten des dritten Tastenfeldes 3, eine Taste "U" für die Kennzeichnung von Unterbrechungen und eine Taste "F" zum Aufrufen von Auswertungen in die Displayfläche 20.

Die Bedienung der oberen drei Reihen des vierten Tastenfeldes 4 wird normalerweise nicht blind erfolgen können, sie erfolgt für jeden Ablaufabschnitt auch nur einmal und kann vor oder nach Erfassen der Studien vorgenommen werden. Wenigstens die untere Tastenreihe dieses Feldes 4 soll dagegen blind bedient werden können. Bei Vorsehung einer entsprechenden Memüsteuerung kann auf die Zeitart-Tasten ohne erhebliche Nachteile verzichtet werden.

Das fünfte Tastenfeld 5 enthält die Cursortasten, mit deren Hilfe der Cursor in der Displayfläche 20 bewegt wird. Die Bedienung der Cursortasten erfolgt unter visueller Beobachtung des Cursors im LCD mit der rechten Hand blind ausgehend von der Warteposition des Mittelfingers in dem zweiten Tastenfeld 2.

Die mit "B" bezeichnete Taste des Tastenfeldes 6 dient zum Eingeben von Bezugsmengen in Verbindung mit den numerischen Tasten des dritten Tastenfeldes 3. Entsprechend werden durch Betätigung der Taste "R" des sechsten Tastenfeldes 6 in Verbindung mit den numerischen Tasten des dritten Zahlenfeldes 3 Regressions-Bezugsmengen eingegeben.

Die Taste "E" des sechsten Tastenfeldes wird bei Abschluß von einigen Eingabe betätigt.

Die Taste "M" des sechsten Tastenfeldes 6 dient zur Rückschaltung auf die nächst höhere Menüebene.

Es ist anzustreben, daß auch die Tasten des sechsten Tastenfeldes blind bedient werden, und zwar bei einer Warteposition der Bedienhand in dem zweiten Tastenfeld 2 mit dem Ringfinger und aus der Warteposition der Hand auf das Tastenfeld 3 mit dem Zeigefinger (entsprechend umgekehrt bei der Ausbildung für Linkshänder).

Die Taste 7 dient zur Aktivierung und Inaktivierung des bei Abnahme der die Schreibfläche 10 bildenden Platte freiliegenden Alpha-Tastatur. Die eigentliche Erfassung und Auswertung der Daten ist ohne deren Verwendung möglich. Sie dient lediglich dem Komfort bei der Vorbereitung oder Nacharbeitung der Studie.

Die vorgeschlagene Anordnung der Bedien-und Beobachtungsflächen eines Datenerfassungs-und Auswertegerätes für Arbeitsstudien ermöglicht es in einem bisher nicht bekannten Maße, daß der Bediener seine Aufmerksamkeit auf den beobachteten Ablauf richten kann. Die häufig zu bedienenden Tasten sind so ausgebildet, daß diese nach kurzer Erlernzeit blind bedient werden. Die Haupt-Eingabefolgen erfolgen in ausgewogenem Zusammenwirken beider Hände. Die Bedienfläche des Gerätes ist optimal genutzt.

**Ansprüche**

1. Datenerfassungs-und Auswertegerät für Arbeitsstudien, mit einer Mehrzahl von aus jeweils mehreren Tasten bestehenden Tastenfeldern, einer Displayfläche (20) und einer unterhalb des Displayfläche (20) angeordneten, zur Aufnahme eines Formblatts dienenden Schreibfläche (10), dadurch gekennzeichnet, daß
-ein erstes, wenigstens eine Spalte von den Zeilen des Formblatts auf der Schreibfläche (10) zugeordneten Tasten aufweisendes Tastenfeld (1) links neben der Schreibfläche (10) angeordnet ist, wobei die Tasten des ersten Tastenfeldes (1) Stopp-Tasten bilden,
-ein zweites Tastenfeld (2) oberhalb der Schreibfläche (10) und rechts neben der Displayfläche (20) angeordnet ist, wobei die Taste des zweiten Tastenfeldes (2) zur Eingabe von Standard-Leistungsgraden dienen,
-ein drittes, aus in drei Spalten und vier Zeilen angeordneten Tasten bestehendes, oberhalb der Schreibfläche (20) und neben der Displayfläche (20) angeordnetes Tastenfeld (3) vorgeschrieben ist, wobei die Tasten des dritten Tastenfeldes (3) zur Eingabe numerischer Werte dienen,
-ein viertes Tastenfeld (4) vorgesehen ist, dessen Tasten zur Eingabe von Standard-Zeitarten dienen,
-ein fünftes Tastenfeld (5) benachbart zu der Displayfläche (20) angeordnet ist, wobei die Tasten des fünften Tastenfeldes (5) zur Steuerung eines Cursors auf der Displayfläche (20) dienen, und
-ein sechstes Tastenfeld (6) benachbart zu dem dritten Tastenfeld (3) angeordnet ist, wobei wenigstens einige der Tasten des sechsten Tastenfeldes (6) zur Eingabe von Bezugsmengen in Verbindung mit den numerischen Tasten des Tastenfeldes dienen.

2. Datenerfassungs-und Auswertegerät für Arbeitsstudien, mit einer Mehrzahl von aus jeweils mehreren Tasten bestehenden Tastenfeldern, einer Displayfläche (20) und einer unterhalb der Displayfläche angeordneten, zur Aufnahme eines Formblatts dienenden Schreibfläche (10) dadurch gekennzeichnet, daß
-ein erstes, wenigstens eine Spalte von den Zeilen des Formblatts auf der Schreibfläche (10) zugeordneten Tasten aufweisendes Tastenfeld (1) rechts neben der Schreibfläche (10) angeordnet ist, wobei die Tasten des ersten Tastenfeldes (1) Stopp-Tasten bilden,
-ein zweites Tastenfeld (2) oberhalb der Schreibfläche (10) und links neben der Displayfläche (20) angeordnet ist, wobei die Taste des zweiten Tastenfeldes (2) zur Eingabe von Standard-Leistungsgraden dienen,
-ein drittes, aus in drei Spalten und vier Zeilen angeordneten Tasten bestehendes, oberhalb der Schreibfläche (10) und neben der Displayfläche (20) angeordnetes Tastenfeld (3), wobei die Tasten des dritten Tastenfeldes (3) zur Eingabe numerischer Werte dienen,
-ein viertes Tastenfeld (4) vorgesehen ist, dessen Tasten zur Eingabe von Standard-Zeitarten dienen,
-ein fünftes Tastenfeld (5) benachbart zu der Displayfläche (20) angeordnet ist, wobei die Tasten des fünften Tastenfeldes (5) zur Steuerung eines Cursors auf der Displayfläche (20) dienen, und
-ein sechstes Tastenfeld (6) benachbart zu dem dritten Tastenfeld (3) angeordnet ist, wobei wenigstens einige der Tasten des sechsten Tastenfeldes (6) zur Eingabe von Bezugsmengen in Verbindung mit den numerischen Tasten des Tastenfeldes dienen.

3. Datenerfassungs-und Auswertegerät nach Anspruch 1 oder Anspruch 2, dadurch gekennzeichnet, daß die Displayfläche (20) durch oder mehrere LCD's gebildet wird.

4. Datenerfassungs-und Auswertegerät nach einem der vorangehenden Ansprüche, dadurch gekennzeichnet, daß die zur Aufnahme des Faltblatts dienende Schreibfläche (10) als unter Freigabe einer Alpha-Tastatur abnehmbare Platte ausgebildet ist.

5. Datenerfassungs-und Auswertegerät nach Anspruch 4, dadurch gekennzeichnet, daß die Platte in am oberen Rand der Bedienfläche des Gerätes angeordnete Ausnehmungen einsteckbar ist.

6. Datenerfassungs-und Auswertegerät nach einem der vorangehenden Ansprüche, dadurch gekennzeichnet, daß das erste Tastenfeld (1) eine weitere, bei der Beobachtung zyklischer Arbeitsabläufe betätigte Taste (Z) aufweist.

7. Datenerfassungs-und Auswertegerät nach einem der vorangehenden Ansprüche, dadurch gekennzeichnet, daß das erste Tastenfeld (1) bei einer Anordnung des Formblatts in zwei Gruppen von Zeilen aus zwei Spalten von Tasten besteht.

8. Datenerfassungs-und Auswertegerät nach einem der vorangehenden Ansprüche, dadurch gekennzeichnet, daß das zweite Tastenfeld (2) eine Taste (L) zur Eingabe von Leistungsgraden in Verbindung mit den numerischen Tasten des dritten Tastenfeldes (3) aufweist.

9. Datenerfassungs-und Auswertegerät nach einem der vorangehenden Ansprüche, dadurch gekennzeichnet, daß das zweite Tastenfeld (2) eine Taste (K) zur Klammerung eines "Ausreißers" aufweist.

10. Datenerfassungs-und Auswertegerät nach einem der vorangehenden Ansprüche, dadurch gekennzeichnet, daß das dritte Tastenfeld (3) aus Tasten mit den Ziffern 0 bis 9, einer Punkt-Taste (.) und einer zur Eingabe der Seitennummer des jeweils verwendeten Formblatts dienende Taste (S) besteht.

11. Datenerfassungs-und Auswertegerät nach einem der vorangehenden Ansprüche, dadurch gekennzeichnet, daß das vierte Tastenfeld (4) neben den Tasten zur Eingabe von Standard-Zeitarten Tasten zur Eingabe von Zeitartkodierungen in Verbindung mit den Tasten des dritten Tastenfeldes (3) aufweist.

12. Datenerfassungs-und Auswertegerät nach einem der vorangehenden Ansprüche, dadurch gekennzeichnet, daß das vierte Tastenfeld (4) eine Taste (U) zur Kennzeichnung von Unterbrechungen aufweist.

13. Datenerfassungs-und Auswertegerät nach einem der vorangehenden Ansprüche, dadurch gekennzeichnet, daß das sechste Tastenfeld (6) eine Enter-Taste (E) zum Abschluß von Eingaben aufweist.

14. Datenerfassungs-und Auswertegerät nach einem der vorangehenden Ansprüche, dadurch gekennzeichnet, daß das sechste Tastenfeld (6) eine Taste (M) zur Rückschaltung auf eine höhere Menüebene aufweist.

15. Datenerfassungs-und Auswertegerät nach einem der vorangehenden Ansprüche, gekennzeichnet durch eine als Erhöhung oder Vertiefung ausgebildete, von der der Ziffer "5" entsprechenden Taste des dritten Tastenfeldes (3) zu einer einem mittleren Wert des Leistungsgrades entsprechenden Taste des zweiten Tastenfeldes (2) führenden Fingerführung (30) in Form einer Erhöhung oder einer Vertiefung.

Fig. 1

Fig. 2